## Europäisches Patentamt

(19) **European Patent Office**

**Office européen des brevets**

(11) Numéro de publication: **0 013 211 B1**

(12) **FASCICULE DE BREVET EUROPEEN**

(45) Date de publication du fascicule du brevet: **20.07.83**

(51) Int. Cl.³: **G 21 C 19/46, G 21 F 9/00**

(21) Numéro de dépôt: **79401005.8**

(22) Date de dépôt: **11.12.79**

(54) **Procédé de traitement des solutions alcalines contenant l'iode radioactif au cours du retraitement des combustibles nucléaires.**

(30) Priorité: **20.12.78 FR 7835829**

(43) Date de publication de la demande:
**09.07.80 Bulletin 80/14**

(45) Mention de la délivrance du brevet:
**20.07.83 Bulletin 83/29**

(84) Etats contractants désignés:
**BE DE GB IT SE**

(56) Documents cités:
**FR-A-2 212 611**
**FR-A-2 277 415**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Brugere, Christiane, 11, rue Rousselet, F-75007 Paris (FR)**
Inventeur: **Goumondy, Jean-Pierre, 172, rue Julian Grimau, F-94400 Vitry (FR)**
Inventeur: **Morel, Jean-Marie, Ap.49 - 2, rue Jean Rostand, F-91300 Massy (FR)**
Inventeur: **Zellner, Edmond, 8, Avenue Raoul Dautry, F-91190 Gif-sur-Yvette (FR)**

(74) Mandataire: **Mongrédien, André et al, c/o BREVATOME 25, rue de Ponthieu, F-75008 Paris (FR)**

ACTORUM AG

Procédé de traitement des solutions alcalines contenant l'iode radioactif au cours du retraitement des combustibles nucléaires

La présente invention se rapporte à un procédé de traitement des solutions alcalines contenant l'iode radioactif au cours du retraitement des combustibles nucléaires.

Au cours de l'irradiation des combustibles dans les réacteurs nucléaires, il se forme de l'iode radioactif qui en majeure partie se trouve emprisonné au sein des combustibles. Au moment du cisaillement de la gaine au début de l'opération de retraitement des combustibles, seulement environ 10% de l'iode s'échappe et le reste ne se trouve libéré qu'au cours de la dissolution des combustibles en milieu nitrique.

Comme l'iode radioactif est polluant et que sa production ne cesse d'augmenter avec l'accroissement du nombre des réacteurs nucléaires en service, plusieurs tentatives ont déjà été faites en vue de récupérer cet iode dans les meilleures conditions possibles.

Parmi les procédés connus déjà utilisés dans ce but, on peut citer celui qui est décrit dans le brevet français n° 2 277 415 déposé le 3 juillet 1974 et intitulé «Procédé d'extraction, de piégeage et de stockage de l'iode radioactif contenu dans les combustibles irradiés». Selon ce procédé, on dissout les combustibles irradiés dans une solution d'acide nitrique, on envoie les vapeurs constituées essentiellement d'eau, d'oxyde d'azote et d'iode, formées au cours de la dissolution, dans un condenseur puis dans une première colonne d'absorption, où il se forme de l'acide nitrique recombiné contenant des ions nitreux et de l'iode, on envoie l'acide recombiné dans une colonne de désorption à contre-courant d'un gaz entraîneur qui se charge en iode. Ce gaz chargé en iode est envoyé dans une deuxième colonne d'absorption à contre-courant d'une solution alcaline additionnée ou non d'un réducteur, on ajoute à la solution alcaline sortant de la seconde colonne d'absorption un sel de cuivre ou de plomb qui précipite l'iode sous forme d'iodure.

Dans le cas de la précipitation de l'iode sous forme d'iodure de plomb, ce procédé présente un inconvénient qui réside dans le fait que l'iode sortant de la seconde colonne d'absorption n'est pas complètement débarrassé des ions nitreux qui peuvent, en milieu réducteur pendant la précipitation de l'iodure de plomb, s'unir au plomb pour fournir du nitrure de plomb qui est un composé instable et susceptible d'exploser.

On sait que les ions nitreux peuvent être éliminés d'une solution par l'action d'agents réducteurs tels que l'hydrazine ou l'acide sulfamique (voir brevet français 2 212 611).

Cependant, dans des procédés de traitement de solutions alcalines contenant de l'iode, l'action de l'hydrazine en milieu alcalin ne permet pas d'éviter l'inconvénient précité.

La présente invention permet de remédier à cet inconvénient en fournissant un procédé d'élimination des ions nitreux qui accompagnent l'iode dans la solution alcaline sortant de la seconde colonne d'absorption.

L'invention a pour objet un procédé de traitement des solutions alcalines contenant l'iode radioactif au cours du retraitement des combustibles nucléaires dans lequel on dissout dans un dissolveur les combustibles irradiés dans une solution d'acide nitrique, on envoie les vapeurs constituées essentiellement d'oxydes d'azote, d'iode et d'eau formées au cours de la dissolution dans un condenseur puis dans une première colonne d'absorption où il se forme de l'acide nitrique recombiné, procédé caractérisé en ce que l'acide recombiné est renvoyé au dissolveur tandis que les gaz sortant de ladite colonne sont envoyés dans une deuxième colonne d'absorption à contre-courant d'une solution alcaline qui se charge en iode et en ions nitreux et en ce que la solution alcaline sortant de la deuxième colonne d'absorption est envoyée dans un réacteur contenant un mélange d'acide nitrique et d'acide sulfamique qui détruit les produits nitreux et libère l'iode.

Il est alors possible de séparer en toute sécurité l'iode sous forme d'iodure de plomb suivant un procédé connu.

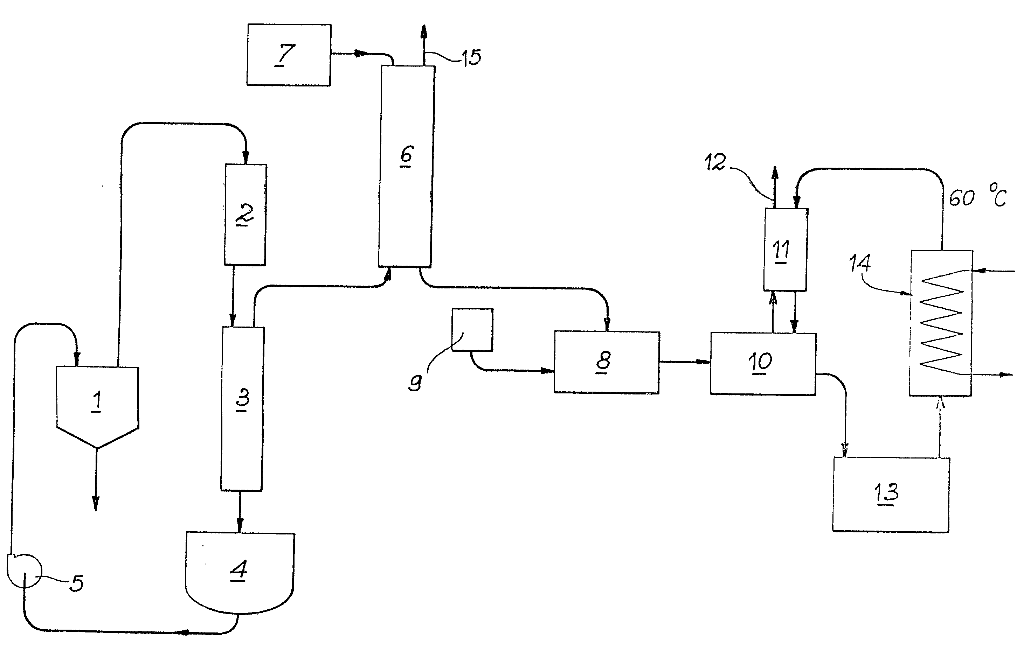

D'autres avantages et caractéristiques de l'invention ressortiront d'ailleurs de la description qui suit d'un exemple de réalisation donné à titre explicatif et nullement limitatif, en référence aux dessins annexés dans lesquels la fig. 1 représente schématiquement les différentes phases du procédé.

Dans une cuve ou dissolveur 1, on dissout deux tonnes de combustibles irradiés contenant de l'iode radioactif. Les vapeurs formées constituées essentiellement d'oxydes d'azote, d'iode et d'eau sont envoyées dans un condenseur 2 où une partie de l'iode se dépose puis dans une première colonne d'absorption 3 où il se forme de l'acide recombiné que l'on recueille dans une cuve 4 avant de le renvoyer au dissolveur 1 au moyen d'une pompe 5. Les gaz sortant de la première colonne d'absorption sont envoyés dans une deuxième colonne d'absorption 6 à contre-courant d'une solution alcaline en provenance d'un bac 7. Les gaz sortant en 15 de la colonne 6 peuvent être recyclés en tête du dissolveur ou dirigés sur des pièges à argent. La solution alcaline sortant de la colonne 6 qui s'est chargée à la fois en iode et en ions nitreux occupe environ 1000 litres et contient:

| Na OH   | 0,4          | M |
| Na NO$_3$ | 0,45       | M |
| Na NO$_2$ | 0,45       | M |
| Na I    | 4,25 10$^{-3}$ | M |

On envoie cette solution lentement, en une heure environ, dans un réacteur 8 contenant 250 l d'une solution d'acide sulfamique 2M et d'acide nitrique dont la température est portée entre 50 et 70 °C.

Les concentrations en HNO$_3$ sont à 50 °C de 5,5 M et à 70 °C de 2,4 M.

L'acide sulfamique joue à la fois le rôle de destructeur des produits nitreux et d'oxydant de l'iode selon les réactions:

$$HNO_2 + SO_3 HNH_2 \rightarrow N_2 + SO_4H_2 + H_2O$$
$$2SO_3 HNH_2 + 3Na\ I + H_2O \rightarrow Na\ I_3 + Na_2 SO_4 + (NH_4)_2SO_3.$$

On peut aussi noter que la désorption de l'iode qui se trouve contenu dans le $Na\ I_3$ qui peut s'écrire $Na\ I,\ I_2$ est favorisée par la présence de l'acide nitrique. Pour assurer la destruction des produits nitreux, il est nécessaire que le rapport:

$$\frac{SO_3 HNH_2}{NO_2^-\ \text{entrant}}$$

soit supérieur ou égal à 1. Il faut en outre s'assurer que, lorsque la température du réacteur est de 50 °C, la concentration initiale en $HNO_3$ est égale à 5,5 M et lorsque la température est égale à 70 °C, cette concentration initiale en $HNO_3$ est égale à 2,4 M.

Pour servir de gaz vecteur à l'iode libéré, on injecte un gaz (par exemple de l'air) par une pompe 9 dans le fond du réacteur. On maintient le débit de gaz à raison de 100 m³ à l'heure après la fin de l'injection de la solution alcaline jusqu'à ce qu'il y ait davantage d'iode décelable dans le réacteur 8. L'opération de désorption demande une à deux heures après l'arrêt de l'injection de la solution alcaline. La majeure partie de l'iode est entraînée sous forme d'iode élémentaire dans le réacteur 10 où elle est précipitée sous forme d'iodure de plomb.

Après la disparition de l'iode du réacteur 8 qui contient 1250 l de solution, la concentration de l'iode restante est inférieure à $10^{-6}$ M, la concentration en $Na+$ est de 1,04 M et celle du $SO_4^{--}$ est de 0,4 M.

Le gaz vecteur entraînant l'iode arrive dans un réacteur 10 qui est surmonté d'une colonne de lavage 11 dans laquelle le gaz ascendant est arrosé d'une pluie d'une solution d'un mélange de nitrate de plomb $10^{-2}$ M et de nitrate d'hydrazine $2.10^{-2}$ M. La précipitation s'effectue convenablement lorsque le rapport $\dfrac{Pb^{++}}{2I^-}$ est supérieur ou égal à 2, lorsque la concentration du nitrate d'hydrazine est de l'ordre de $2,10^{-2}$ M et lorsque le pH est compris entre 3 et 1. L'ensemble réacteur et colonne doit être maintenu à 60 °C. Les gaz sortant en 12 de la colonne 11 peuvent être recyclés en tête du dissolveur ou dirigés sur des pièges à argent.

La solution sortant du réacteur 10 est refroidie entre 15 et 20 °C pour obtenir la précipitation d'iodure de plomb puis est envoyée dans un décanteur 13 lui-même refroidi entre 15 et 20 °C. Le précipité décante rapidement et peut être recueilli au fond du décanteur 13. La solution surnageante est filtrée, réchauffée à 60 °C dans le réchauffeur 14 et réajustée à l'aide d'oxyde de plomb et d'hydrazine avant d'être envoyée en tête de la colonne de lavage 11 des gaz. On récupère l'iodure de plomb à l'état solide et il est conditionné de façon connue.

## Revendications

1. Procédé de traitement des solutions alcalines contenant l'iode radioactif au cours du retraitement des combustibles nucléaires dans lequel on dissout dans un dissolveur (1) les combustibles irradiés dans une solution d'acide nitrique, on envoie les vapeurs constituées essentiellement d'oxydes d'azote, d'iode et d'eau formées au cours de la dissolution dans un condenseur (2) puis dans une première colonne d'absorption (3) où il se forme de l'acide nitrique recombiné, procédé caractérisé en ce que l'acide recombiné (4) est renvoyé au dissolveur (1) tandis que les gaz sortant de ladite colonne sont envoyés dans une deuxième colonne d'absorption (6) à contre-courant d'une solution alcaline qui se charge en iode et en ions nitreux et en ce que la solution alcaline sortant de la deuxième colonne d'absorption est envoyée dans un réacteur (8) contenant un mélange d'acide nitrique et d'acide sulfamique qui détruit les produits nitreux et libère l'iode.

2. Procédé selon la revendication 1, caractérisé en ce que dans le réacteur (8), on maintient le rapport des concentrations entre l'acide sulfamique et les ions nitreux entrant à une valeur au moins égale à 1.

3. Procédé selon la revendication 1, caractérisé en ce que la température du réacteur (8) est réglée entre 50 et 70 °C et les concentrations initiales en acide nitrique sont comprises entre 5,5 M et 2,4 M.

## Claims

1. Process for the treatment of alkaline solutions containing radioactive iodine during reprocessing of nuclear fuels in which irradiated fuel is dissolved in nitric acid solution in a dissolving vessel (1), vapours consisting essentially of nitrogen oxides, iodine and water, formed during the course of solution are conducted through a condenser (2) and then into a first absorption column (3) where they form regenerated nitric acid, the process being characterized in that the regenerated nitric acid is recycled to the dissolving vessel (1), and the gas leaving the said column is conducted into a second absorption column (6) in countercurrent to an alkaline solution which becomes charged with iodine and nitrous ions, and in that the alkaline solution leaving the second absorption column is conducted into a reactor (8) containing a mixture of nitric acid and sulphamic acid, which breaks down the nitrous products and liberates iodine.

2. Process according to Claim 1 characterized in that the ratio between the concentration of sulphamic acid and the concentration of nitrous ions entering the reactor is maintained in the reactor at a value of at least 1.

3. Process according to Claim 1 characterized in that the temperature of the reactor (8) is held between 50 and 70 °C, and the initial concentration of nitric acid is between 5.5M and 2.4M.

## Patentansprüche

1. Verfahren zur Behandlung von radioaktives Jod enthaltenden alkalischen Lösungen im Verlauf der Aufarbeitung von Kernbrennstoffen, wobei man die bestrahlten Brennstoffe in einem Lösungsbehälter (1) in einer Salpetersäurelösung löst, die Dämpfe, die im wesentlichen aus Stickoxiden, Jod und Wasser bestehen und sich im Verlauf der Auflösung gebildet haben, in einen Kondensor (2) und dann in eine erste Absorptionskolonne (3) leitet, wo sich rückgebildete Salpetersäure bildet, dadurch gekennzeichnet, dass die rückgebildete Säure (4) wieder auf das Lösungsgefäss (1) geleitet wird, während die Gase, die die genannte Kolonne verlassen, in eine zweite Absorptionskolonne (6) im Gegenstrom mit einer alkalischen Lösung geleitet werden, die sich mit Jod und nitrosen lonen belädt, und weiterhin dadurch gekennzeichnet, dass die alkalische Lösung, die die zweite Absorptionskolonne verlässt, in einen Reaktor (8) geleitet wird, der eine Mischung von Salpetersäure und Amidosulfonsäure enthält, die die nitrosen Produkte zersetzt und das Jod freisetzt.

2. Verfahren nach Anspruch 1, dadurch gekennzeichnet, dass man im Reaktor (8) das Konzentrationsverhältnis zwischen der hinzukommenden Amidosulfonsäure und den hinzukommenden nitrosen lonen zwischen einem Wert von mindestens gleich 1 hält.

3. Verfahren nach Anspruch 1, dadurch gekennzeichnet, dass die Temperatur des Reaktors (8) zwischen 50 und 70 °C eingestellt wird und die Anfangskonzentrationen an Salpetersäure zwischen 5,5 M und 2,4 M liegen.

60 °C

0 013 211